# EUROPÄISCHE PATENTANMELDUNG

(11) **EP 1 304 464 A2**
(43) Veröffentlichungstag der Anmeldung: **23.04.2003**
(21) Anmeldenummer: 02019347.0
(22) Anmeldetag: 29.08.2002
(51) Int. Cl.: F02D 9/10

(54) **Verfahren zum Betreiben einer mehrzylindrischen Brennkraftmaschine**

(30) Priorität: 19.10.2001 DE 10151687
(71) Anmelder: DaimlerChrysler AG, 70567 Stuttgart (DE)
(72) Erfinder: Leweux, Johannes, 73733 Esslingen (DE); Schnüpke, Hubert, 70619 Stuttgart (DE); Schröer, Dietmar, 71686 Remseck (DE)

(57) **Zusammenfassung**

Bei einem Verfahren zum Betreiben einer mehrzylindrischen Brennkraftmaschine wird mehreren Brennräumen über zugeordnete Einlasskanäle in. Abhängigkeit der Stellung von in den Einlasskanälen angeordneten Einlassventilen und eines weiteren, jedem Brennraum zugeordneten Steuerelementes Luft zugeführt. Der Betriebszustand jedes einzelnen Zylinders wird ermittelt und für jeden Zylinder wird die Stellung des jeweiligen Steuerelementes in dem jeweiligen Einlasskanal abhängig vom Betriebszustand in dem Zylinder geregelt.

## Beschreibung

Die Erfindung betrifft ein Verfahren zum Betreiben einer mehrzylindrischen Brennkraftmaschine nach der im Oberbegriff von Anspruch 1 näher definierten Art. Des weiteren betrifft die Erfindung eine mehrzylindrische Brennkraftmaschine gemäß dem Oberbegriff von Anspruch 5.

In der DE 38 24 133 A1 und der DE 41 41 482 A1 sind gattungsgemäße Verfahren beschrieben, bei denen mit Hilfe eines zusätzlichen, in dem Einlasskanal angeordneten Steuerelementes die Luftzufuhr zu den Brennräumen der Brennkraftmaschine beeinflusst werden kann. Dieses Steuerelement ist also zusätzlich zu den bekannten Einlassventilen vorgesehen und ermöglicht, z.B. durch früheres Schließen oder späteres Öffnen des Einlasskanales, weitere Betriebsarten der Brennkraftmaschine.

Zwar eröffnen sich mit dem beschriebenen Verfahren neue Möglichkeiten für den Betrieb von Brennkraftmaschinen, die die unterschiedlichsten Vorteile aufweisen können, durch Toleranzen bei der Fertigung und der Ansteuerung dieser Steuerelemente kann es nachteiligerweise jedoch zu Abweichungen der Ladungszusammensetzung zwischen den einzelnen Zylindern bzw. bezüglich der tatsächlich gewünschten Ladungszusammensetzung kommen. Dadurch kann der Mitteldruck von Arbeitsspiel zu Arbeitsspiel schwanken, was zu einem rauhen Lauf der Brennkraftmaschine führen kann. Die in modernen Brennkraftmaschinen meist vorhandene Lambdaregelung wird durch diese unterschiedliche Ladungszusammensetzung außerdem erheblich gestört.

Es ist daher Aufgabe der vorliegenden Erfindung, ein Verfahren zum Betreiben einer mehrzylindrischen Brennkraftmaschine zu schaffen, mittels welchem die Ladungszusammensetzung in den einzelnen Zylindern einen optimalen Wert erreicht. Mit der hierfür vorgesehenen Brennkraftmaschine soll dieses Verfahren in einfacher Weise durchgeführt werden können, wobei die Brennkraftmaschine selbst einen möglichst einfachen Aufbau besitzen soll.

Erfindungsgemäß wird diese Aufgabe durch die in Anspruch 1 genannten Merkmale verfahrenstechnisch gelöst. Eine Brennkraftmaschine zur Durchführung des Verfahrens ergibt sich aus den Merkmalen des Anspruches 5.

Durch das erfindungsgemäße Ermitteln des Betriebszustandes jedes einzelnen Zylinders und das dementsprechende Regeln der Stellung des jeweiligen Steuerelementes in Abhängigkeit dieses Betriebszustandes ergibt sich ein Regelkreis für jedes einzelne Steuerelement des jeweiligen Zylinders, also eine zylinderselektive Regelung der Brennkraftmaschine durch die Steuerelemente, wodurch eventuelle Toleranzen im Zusammenhang mit den Steuerelementen oder auch mit anderen Bauteilen der Brennkraftmaschine ausgeglichen werden können und sich für jeden Zylinder eine identische Zylinderfüllung ergibt.

Auf diese Weise können bisher bestehende Nachteile bezüglich Laufruhe und Abgasausstoß der Brennkraftmaschine vermieden und dementsprechend weitaus geringere Abgasgrenzwerte eingehalten werden.

Insbesondere in Fällen, in denen zur drosselarmen Laststeuerung der Brennkraftmaschine ein früheres Schließen der Luftzufuhr vorgesehen ist, ist aufgrund der verhältnismäßig großen Sensibilität der Ladeluftmenge im Bezug auf Abweichungen der Steuerzeiten die beschriebene Regelung sehr vorteilhaft, da gerade mit dem erfindungsgemäßen Verfahren sehr gute Ergebnisse erzielt werden können.

Mit der erfindungsgemäßen Brennkraftmaschine mit dem wenigstens einen Sensor, der wenigstens einen Rechnereinrichtung und der Stelleinrichtung für das Steuerelement lässt sich das oben beschriebene Verfahren besonders einfach ausführen.

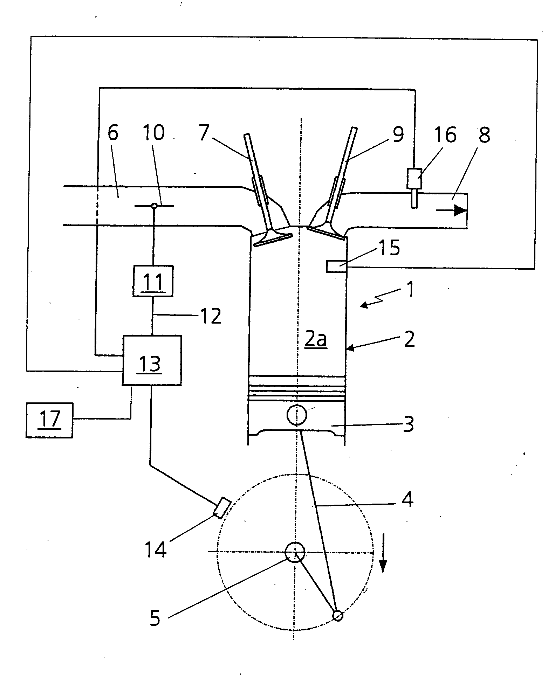

Vorteilhafte Ausgestaltungen und Weiterbildungen der Erfindung ergeben sich aus den Unteransprüchen sowie aus dem nachfolgend anhand der Zeichnung prinzipmäßig dargestellten Ausführungsbeispiel.

Die einzige Figur zeigt eine schematische Darstellung der erfindungsgemäßen Brennkraftmaschine.

Eine Brennkraftmaschine 1 weist mehrere Zylinder 2 mit einem jeweiligen Brennraum 2a auf, wobei jedoch nur ein Zylinder 2 mit seinem Brennraum 2a dargestellt ist. Der im folgenden für den Zylinder 2 beschriebene Aufbau gilt, unabhängig von der Zylinderzahl, für alle Zylinder 2 der Brennkraftmaschine 1. In dem Zylinder 2 ist ein Kolben 3 angeordnet, der dort in bekannter Weise eine oszillierende Bewegung ausführt. Der Kolben 3 ist über ein Pleuel 4 mit einer Kurbelwelle 5 verbunden, um diese oszillierende Bewegung in eine rotierende Bewegung für ein nicht dargestelltes Getriebe oder dergleichen umzusetzen.

Zu dem Brennraum 2a führen einer oder mehrere Einlasskanäle 6, von denen im vorliegenden Fall nur einer dargestellt ist. Der Einlasskanal 6 ist zur Zufuhr von Ladeluft oder einem Kraftstoff-Luft-Gemisch zu dem Brennraum 2a vorgesehen, wozu am Übergang von dem Einlasskanal 6 in den Brennraum 2a ein Einlassventil 7 angeordnet ist, um den Brennraum 2a in bekannter Weise gegenüber dem Einlasskanal 6 zu schließen bzw. zu öffnen.

In gleicher Weise sind ein oder mehrere Auslasskanäle 8 vorgesehen, in denen am Austritt aus dem Brennraum 2a jeweils ein Auslassventil 9 angeordnet ist. Die Einlassventile 7 und die Auslassventile 9 können über eine nicht dargestellte Nockenwelle, elektromagnetisch oder in anderer Weise betätigt werden, wobei gegebenenfalls auch andere geeignete Einrichtungen am Übergang von dem Brennraum 2a zu dem Einlasskanal 6 bzw. dem Auslasskanal 8 vorgesehen sein können, um die Zuund Abfuhr von Luft zu bzw. aus dem Brennraum 2a in geeigneter Weise zu erreichen.

In dem Einlasskanal 6 ist ein weiteres Steuerelement 10 angeordnet, das im vorliegenden Fall als Klappe ausgebildet ist und in seinem geschlossenen Zustand den Einlasskanal 6 vollständig verschließt. Im vorliegenden Fall ist das Steuerelement 10 in einem geöffneten Zustand dargestellt, so dass die Ladeluft an der Durchströmung des Einlasskanals 6 nicht gehindert wird. Die Stellung des Steuerelementes 10 bestimmt den Grad der Verringerung des wirksamen Querschnitts des Einlasskanals 6, wobei eine geschlossene, die dargestellte geöffnete sowie eine Mittel- oder Ruhestellung für das Steuerelement 10 vorgesehen sind. Durch Verändern der Zeit, in der das Steuerelement 10 geöffnet oder geschlossen ist, lassen sich verschiedene Betriebsweisen der Brennkraftmaschine 1 zumindest teilweise unabhängig von der Stellung der Einlassventile 7 einnehmen. Selbstverständlich kann das Steuerelement 10 auch in einer von einer Klappe verschiedenen Form ausgebildet sein, z.B. als Schieber, als Hub- oder Tellerventil oder in anderer, geeigneter Art und Weise.

So kann beispielsweise vor dem Schließen der Einlassventile 7 das Steuerelement 10 in seine geschlossene Position gebracht werden, so dass bereits vor dem eigentlichen Ende der Luftzufuhr der Einlasskanal 6 verschlossen wird. Eine andere Möglichkeit ist das spätere Öffnen des Einlasskanals 6 dadurch, dass das Steuerelement 10 auch nach dem Öffnen der Einlassventile 7 noch für einen gewissen Zeitraum in seiner geschlossenen Position verbleibt. Des weiteren ist auch eine Impulsaufladung für den Brennraum 2a möglich, bei welcher der Ladeluftmenge durch entsprechendes Stauen eine größere Geschwindigkeit gegeben wird. Auf diese Art und Weise lassen sich also die unterschiedlichsten Füllungszustände des Brennraumes 2a erreichen, was in verschiedenen Betriebszuständen der Brennkraftmaschine unterschiedliche Wirkungen und Vorteile mit sich bringen kann, die hier jedoch nicht diskutiert werden sollen.

Da bei der vorliegenden Darstellung der Brennkraftmaschine 1 lediglich ein Einlasskanal 6 gezeigt ist, ist es selbstverständlich auch lediglich ein Steuerelement 10 zu erkennen. Tatsächlich ist jedem Zylinder 2 wenigstens eines der Steuerelemente 10 zugeordnet, wobei in dem Fall, dass mehrere Einlasskanäle 6 zu einem Zylinder 2 führen, auch in jedem einzelnen der Einlasskanäle 6 ein Steuerelement 10 vorgesehen sein kann. Alternativ ist es auch möglich, das dem jeweiligen Zylinder 2 zugeordnete Steuerelement 10 an einer Stelle anzuordnen, an der die zu dem Zylinder 2 führende Einlassleitung noch nicht in die einzelnen Einlasskanäle 6 unterteilt ist. Durch die Anordnung eines Steuerelementes 10 in jedem einzelnen Einlasskanal 6 des jeweiligen Zylinders 2 können unterschiedliche Ladungsarten innerhalb des Brennraumes 2a realisiert werden.

Jedes einzelne Steuerelement 10 ist mit einer Stelleinrichtung 11 zur Änderung seiner Stellung, d.h. seiner Verringerung des Querschnitts des Einlasskanals 6 zugeordnet. Bei der Stelleinrichtung 11 kann es sich beispielsweise um einen Elektromotor handeln, der mit dem Steuerelement 10 über ein beispielsweise als Welle ausgeführtes Verbindungselement 12 verbunden ist. Hierdurch kann das Steuerelement 10 mit sehr hoher Geschwindigkeit verstellt werden, so dass eine sehr exakte Ansteuerung desselben abhängig von der in den Brennraum 2a jeweils zuzuführenden Luft eingenommen werden kann.

Die Stelleinrichtung 11 ist mit einer Rechnereinrichtung 13 verbunden, welche sämtliche Steuerelemente 10 der Brennkraftmaschine 1 einzeln steuert. Alternativ wäre auch für jedes der Steuerelemente 10 eine separate Rechnereinrichtung 13 denkbar.

Um eine Regelung der Stellung jedes einzelnen der Steuerelemente 10 zu erreichen, sind an der Rechnereinrichtung 13 über entsprechende Leitungen ein Kurbelwellensensor 14, ein Drucksensor 15 und ein Sauerstoffsensor 16 angeschlossen. Wie im folgenden näher beschrieben wird, dient jeder einzelne der Sensoren 14, 15 und 16 zur Ermittlung des Betriebszustandes jedes einzelnen Zylinders 2 der Brennkraftmaschine 1. Aus dem ermittelten Betriebszustand des Zylinders 2 berechnet dann die Rechnereinrichtung 13 die erforderliche Stellung des Steuerelementes 10, die dann über die Stelleinrichtung 11 insbesondere bezüglich ihres Zeitpunktes sehr exakt eingestellt werden kann.

Dadurch können Toleranzen des Steuerelementes 10 ausgeglichen werden, und zwar sowohl in maßlicher als auch in steuerungstechnischer Hinsicht. Selbstverständlich erhält die Rechnereinrichtung 13 auch Angaben darüber, welcher Betriebszustand der Brennkraftmaschine 1 momentan erwünscht ist und ermittelt hieraus die erforderliche Stellung des Steuerelementes 10. Dies ist durch das Bezugszeichen 17 angedeutet.

Der Kurbelwellensensor 14 ist im Bereich der Kurbelwelle 5 angeordnet und ermittelt die Drehungleichförmigkeit derselben. Hierzu ist lediglich ein Kurbelwellensensor 14 für die gesamte Brennkraftmaschine 1 erforderlich, da eine entstehende Drehungleichförmigkeit dem jeweils zündenden Zylinder 2 durch die Rechnereinrichtung 13 zugeordnet werden kann. Selbstverständlich könnte auch für jeden Zylinder 2 ein separater Kurbelwellensensor 14 vorgesehen sein.

Der Drucksensor 15 ist in dem Brennraum 2a des Zylinders 2 angeordnet und misst den Druck in dem Brennraum 2a. Aus diesem Grund ist für jeden der Zylinder 2 ein einzelner Drucksensor 15 erforderlich, da nur dann eine Aussage über den Betriebszustand des jeweiligen Zylinders 2 gemacht werden kann, wenn dieser mit dem Drucksensor 15 in Wirkverbindung steht.

Der Sauerstoffsensor 16 ist in wenigstens einem der Auslasskanäle 8 angeordnet, die den einzelnen Zylindern 2 zugeordnet sind. Die Brennkraftmaschine 1 weist also mindestens eine der Anzahl der Zylinder 2 entsprechende Anzahl an Sauerstoffsensoren 16 auf. Die Sauerstoffsensoren 16 messen den Sauerstoffgehalt in dem den jeweiligen Brennraum 2a verlassenden Abgas und ermitteln so den Betriebszustand des zugehörigen Zylinders 2.

Im vorliegenden Fall sind mehrere Sensoren 14 ,15 und 16 vorgesehen. Es ist allerdings ebenfalls möglich, lediglich einen der Sensoren 14, 15 oder 16 vorzusehen, um den Betriebszustand jedes einzelnen Zylinders 2 der Brennkraftmaschine 1 zu ermitteln. Dadurch, dass die Sensoren 14, 15 und/oder 16 ihre ermittelten Werte bezüglich des Betriebszustands der Brennkraftmaschine 1 an die Rechnereinrichtung 13 weitergeben, kann für jeden einzelnen der Zylinder 2 eine optimale Ansteuerung des Steuerelementes 10 erreicht werden und es ist somit eine zylinderselektive Regelung der Brennkraftmaschine 1 gegeben. Auf diese Weise können, wie bereits oben erwähnt, Abweichungen einzelner Steuerelemente 10 bzw. zugehöriger Brennräume 2a oder der Geometrie der Einlasskanäle 6, also insbesondere systematische Abweichungen bei jedem Hub des Kolbens 3 ausgeglichen werden.

## Patentansprüche

1. Verfahren zum Betreiben einer mehrzylindrischen Brennkraftmaschine, wobei mehreren Brennräumen über zugeordnete Einlasskanäle in Abhängigkeit der Stellung von in den Einlasskanälen angeordneten Einlassventilen und eines weiteren, jedem Brennraum zugeordneten Steuerelementes Luft zugeführt wird,
**dadurch gekennzeichnet, dass**
der Betriebszustand jedes einzelnen Zylinders (2) ermittelt wird, und dass für jeden Zylinder (2) die Stellung des jeweiligen Steuerelementes (10) in dem jeweiligen Einlasskanal (6) abhängig vom Betriebszustand in dem Zylinder (2) geregelt wird.

2. Verfahren nach Anspruch 1,
**dadurch gekennzeichnet, dass**
zur Ermittlung des Betriebszustandes jedes einzelnen Zylinders (2) die Drehungleichförmigkeit einer Kurbelwelle (5) gemessen wird.

3. Verfahren nach Anspruch 1 oder 2,
**dadurch gekennzeichnet, dass**
zur Ermittlung des Betriebszustandes jedes einzelnen Zylinders (2) der Druck in dem jeweiligen Zylinder (2) einzeln gemessen wird.

4. Verfahren nach Anspruch 1, 2 oder 3,
**dadurch gekennzeichnet, dass**
zur Ermittlung des Betriebszustandes jedes einzelnen Zylinders (2) der Sauerstoffanteil in dem den jeweiligen Brennraum (2a) verlassenden Abgas einzeln gemessen wird.

5. Mehrzylindrische Brennkraftmaschine, insbesondere zur Durchführung des Verfahrens nach einem der Ansprüche 1 bis 4, mit den einzelnen Zylindern zugeordneten Einlasskanälen, in denen jeweils wenigstens ein Einlassventil und ein weiteres Steuerelement angeordnet sind,
**gekennzeichnet durch**
wenigstens einen Sensor (14,15,16) zur Ermittlung des Betriebszustandes jedes einzelnen Zylinders (2), wenigstens eine mit dem wenigstens einen Sensor (14,15,16) verbundene Rechnereinrichtung (13) und für jeden Zylinder (2) jeweils eine mit der wenigstens einen Rechnereinrichtung (13) verbundene Stelleinrichtung (11) zur Änderung der Stellung des jeweiligen weiteren Steuerelementes (10).

6. Brennkraftmaschine nach Anspruch 5,
**dadurch gekennzeichnet, dass**
der wenigstens eine Sensor (14,15,16) ein Kurbelwellensensor (14) zur Ermittlung der Drehungleichförmigkeit einer Kurbelwelle (5) ist.

7. Brennkraftmaschine nach Anspruch 5 oder 6,
**dadurch gekennzeichnet, dass**
in jedem Zylinder (2) wenigstens ein Drucksensor (15) angeordnet ist.

8. Brennkraftmaschine nach Anspruch 5, 6 oder 7,
**dadurch gekennzeichnet, dass**
in jedem den jeweiligen Zylinder (2) verlassenden Auslasskanal (8) ein Sauerstoffsensor (16) angeordnet ist.

9. Brennkraftmaschine nach einem der Ansprüche 5 bis 8,
**dadurch gekennzeichnet, dass**
das weitere Steuerelement (10) in seinem geschlossenen Zustand den jeweiligen Einlasskanal (6) vollständig verschließt.
